# EUROPEAN PATENT APPLICATION

(11) **EP 4 583 602 A1**
(43) Date of publication of application: **09.07.2025**
(21) Application number: 22956868.8
(22) Date of filing: 31.08.2022
(51) Int. Cl.: H04W 72/04, H04W 4/40, H04W 76/14, H04W 8/24

(54) **CAPABILITY INTERACTION METHOD AND APPARATUS, AND DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Hersina, Günter
(86) International application number: PCT/CN2022/116192
(87) International publication number: WO 2024/045039

(57) **Abstract**

The present disclosure belongs to the technical field of communications. Provided are a capability interaction method and apparatus, and a device and a storage medium. The method comprises: sending first capability information to a peer terminal, wherein the first capability information is used for indicating a sending carrier and/or a receiving carrier supported by a local terminal, and the local terminal and the peer terminal communicate with each other by means of a sidelink. The present disclosure can prevent the occurrence of a situation of "during unicast communication, a data packet being lost or it being impossible to perform unicast communication because a sending carrier and/or a receiving carrier supported by a local terminal is different from a sending carrier and/or a receiving carrier supported by a peer terminal", and ensures the stability of the unicast communication.

## Description

### TECHNICAL FIELD

The disclosure relates to the field of communication technologies, and in particular, to a capability interaction method/apparatus/device and storage medium.

### BACKGROUND

In a communication system, in order to support direct communication between terminal devices and improve communication efficiency, sidelink is introduced. In addition, carrier aggregation (CA) technology has been introduced in the communication system to effectively improve the uplink and downlink transmission rates.

In related technologies, the New Radio (NR) sidelink system can support sidelink carrier aggregation technology, and the NR sidelink system also supports unicast transmission mode, that is, the "point-to-point" transmission mode between the sending terminal and the receiving terminal.

However, in related technologies, due to limitations in sending and receiving capabilities, terminals may only be able to receive sidelink services on one or a few carriers. At this point, when the terminals in the NR sidelink system communicate through unicast, there may be situations where the sending carriers supported by the sending terminal and the receiving carriers supported by the receiving terminal are not completely identical or do not coincide, which may result in packet loss or prevent the sending and receiving terminals from performing unicast communication.

### SUMMARY

The capability interaction method/ apparatus/device and storage medium proposed in this disclosure solve the technical problem of data packet loss or inability to perform unicast communication caused by the inconsistency between the sending carrier supported by the transmitting terminal and the receiving carrier supported by the receiving terminal in the NR sidelink carrier aggregation scenario.

In a first aspect, embodiments of the present disclosure provide a capability interaction method. The method is performed by a local terminal, and includes:

sending first capability information to a peer terminal, in which the first capability information is used to indicate carriers supported by the local terminal for sending and/or receiving, in which the local terminal and the peer terminal communicate with each other through a sidelink.

In this disclosure, a capability interaction method is provided, in which the local terminal sends first capability information to the peer terminal, which is used to indicate the carriers supported by the local terminal for sending and/or receiving. The local terminal and the peer terminal communicate with each other through a sidelink. From this, it can be seen that in this disclosure, the local terminal sends the first capability information indicating the carriers supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Optionally, in an embodiment of the present disclosure, sending the first capability information to the peer terminal includes:

sending the first capability information to the peer terminal through a PC5 radio resource control (RRC) signaling.

Optionally, in an embodiment of the present disclosure, sending the first capability information to the peer terminal through the PC5 RRC signaling includes at least one of:
sending the first capability information by sending a first list to the peer terminal through the PC5 RRC signaling, wherein the first list includes carrier indication information corresponding to carriers supported by the local terminal for sending and receiving;
sending the first capability information by sending a second list and/or a third list to the peer terminal through the PC5 RRC signaling, wherein the second list includes carrier indication information corresponding to carriers supported by the local terminal for sending, and the third list includes carrier indication information corresponding to carriers supported by the local terminal for receiving.

Optionally, in an embodiment of the present disclosure, the carrier indication information includes at least one of:
a cell identifier corresponding to a carrier;
a carrier identifier corresponding to a carrier;
a carrier band corresponding to a carrier.

Optionally, in an embodiment of the present disclosure, sending the first capability information to the peer terminal includes:
sending the first capability information to the peer terminal through a PC5 media access control - control element (MAC CE) signaling.

Optionally, in an embodiment of the present disclosure, sending the first capability information to the peer terminal through the PC5 MAC CE signaling includes at least one of:
sending the first capability information by sending a first MAC CE signaling to the peer terminal, wherein the first MAC CE signaling carries first indication information, and a bit value carried by a bit of the first indication information is used to indicate whether the local terminal supports sending and receiving on the carrier corresponding to the bit;
sending the first capability information by sending a second MAC CE signaling and/or a third MAC CE signaling to the peer terminal, wherein the second MAC CE signaling carries second indication information, the third MAC CE signaling carries third indication information, a bit value carried by a bit of the second indication information is used to indicate whether the local terminal supports sending on the carrier corresponding to the bit, and a bit value carried by a bit of the third indication information is used to indicate whether the local terminal supports receiving on the carrier corresponding to the bit.

Optionally, in an embodiment of the present disclosure, the method further includes:
receiving second capability information sent by the peer terminal, wherein the second capability information is used to indicate carriers supported by the peer terminal for sending and/or receiving.

Optionally, in an embodiment of the present disclosure, the carriers supported by the peer terminal for sending and/or receiving includes at least one carrier in the carriers supported by the local terminal for sending and/or receiving,
and/or
at least one carrier other than the carriers supported by the local terminal for sending and/or receiving.

Optionally, in an embodiment of the present disclosure, receiving the second capability information sent by the peer terminal includes:
receiving the second capability information sent by the peer terminal through a PC5 RRC signaling.

Optionally, in an embodiment of the present disclosure, receiving the second capability information sent by the peer terminal through the PC5 RRC signaling includes at least one of:
receiving the second capability information by receiving a fourth list sent by the peer terminal through the PC5 RRC signaling, wherein the fourth list includes carrier indication information corresponding to carriers supported by the peer terminal for sending and receiving;
receiving the second capability information by receiving a fifth list and/or a sixth list sent by the peer terminal through the PC5 RRC signaling, wherein the fifth list includes carrier indication information corresponding to the carriers supported by the peer terminal for receiving, and the sixth list includes carrier indication information corresponding to the carriers supported by the peer terminal for sending.

Optionally, receiving the second capability information sent by the peer terminal through the PC5 RRC signaling includes:
receiving the second capability information by receiving a seventh list sent by the peer terminal through the PC5 RRC signaling, wherein the seventh list includes at least one bit, bits contained in the seventh list correspond one-to-one with the carriers indicated by the carrier indication information in the first list, and a bit value carried by the bit in the seventh list is used to indicate whether the peer terminal supports sending and receiving on the carrier corresponding to the bit.

Optionally, in an embodiment of the present disclosure, receiving the second capability information sent by the peer terminal includes:
receiving the second capability information sent by the peer terminal through a PC5 MAC CE signaling.

Optionally, in an embodiment of the present disclosure, receiving the second capability information sent by the peer terminal through the PC5 MAC CE signaling includes at least one of:
receiving the second capability information sent by the peer terminal through a fourth MAC CE signaling, wherein the fourth MAC CE signaling carries fourth indication information, and a bit value carried by a bit of the fourth indication information is used to indicate whether the peer terminal supports sending and receiving on the carrier corresponding to the bit;
receiving the second capability information sent by the peer terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on the carrier corresponding to the bit, and a bit value carried by a bit of the sixth indication information is used to indicate whether the peer terminal supports receiving on the carrier corresponding to the bit.

Optionally, in an embodiment of the present disclosure, bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

Optionally, in an embodiment of the present disclosure, the method further includes:
in response to the local terminal determining that the peer terminal does not support receiving on any of the carriers supported by the local terminal for sending, releasing connection with the peer terminal.

In a second aspect, embodiments of the present disclosure provide a capability interaction method. The method is performed by a peer terminal, and includes:
receiving first capability information sent by a local terminal, in which the first capability information is used to indicate carriers supported by the local terminal for sending and/or receiving, in which the local terminal and the peer terminal communicate with each other through a sidelink.

Optionally, in an embodiment of the present disclosure, receiving the first capability information sent by the local terminal includes:
receiving the first capability information sent by the local terminal through a PC5 RRC signaling.

Optionally, in an embodiment of the present disclosure, receiving the first capability information sent by the local terminal through the PC5 RRC signaling includes at least one of:
receiving the first capability information by receiving a first list sent by the local terminal through the PC5 RRC signaling, wherein the first list includes carrier indication information corresponding to carriers supported by the local terminal for sending and receiving;
receiving the first capability information by receiving a second list and/or a third list sent by the local terminal through the PC5 RRC signaling, wherein the second list includes carrier indication information corresponding to carriers supported by the local terminal for sending, and the third list includes carrier indication information corresponding to carriers supported by the local terminal for receiving.

Optionally, in an embodiment of the present disclosure, the carrier indication information includes at least one of:
a cell identifier corresponding to a carrier;
a carrier identifier corresponding to a carrier;
a carrier band corresponding to a carrier.

Optionally, in an embodiment of the present disclosure, receiving the first capability information sent by the local terminal includes:
receiving the first capability information sent by the local terminal through a PC5 MAC CE signaling.

Optionally, in an embodiment of the present disclosure, receiving the first capability information sent by the local terminal through the PC5 MAC CE signaling includes at least one of:
receiving the first capability information sent by the local terminal through a first MAC CE signaling, wherein the first MAC CE signaling carries first indication information, and a bit value carried by a bit of the first indication information is used to indicate whether the local terminal supports sending and receiving on the carrier corresponding to the bit;
receiving the first capability information sent by the local terminal through a second MAC CE signaling and/or a third MAC CE signaling, wherein the second MAC CE signaling carries second indication information, the third MAC CE signaling carries third indication information, a bit value carried by a bit of the second indication information is used to indicate whether the local terminal supports sending on the carrier corresponding to the bit, and a bit value carried by a bit of the third indication information is used to indicate whether the local terminal supports receiving on the carrier corresponding to the bit.

Optionally, in an embodiment of the present disclosure, the method further includes:
sending second capability information to the local terminal, wherein the second capability information is used to indicate carriers supported by the peer terminal for sending and/or receiving.

Optionally, in an embodiment of the present disclosure, the carriers supported by the peer terminal for sending and/or receiving includes at least one carrier in the carriers supported by the local terminal for sending and/or receiving,
and/or
at least one carrier other than the carriers supported by the local terminal for sending and/or receiving.

Optionally, in an embodiment of the present disclosure, sending second capability information to the local terminal includes:
sending the second capability information to the local terminal through a PC5 RRC signaling.

Optionally, in an embodiment of the present disclosure, sending the second capability information to the local terminal through the PC5 RRC signaling includes at least one of:
sending the second capability information by sending a fourth list to the local terminal through the PC5 RRC signaling, wherein the fourth list includes carrier indication information corresponding to carriers supported by the peer terminal for sending and receiving;
sending the second capability information by sending a fifth list and/or a sixth list to the local terminal through the PC5 RRC signaling, wherein the fifth list includes carrier indication information corresponding to the carriers supported by the peer terminal for receiving, and the sixth list includes carrier indication information corresponding to the carriers supported by the peer terminal for sending.

Optionally, sending the second capability information to the local terminal through the PC5 RRC signaling includes:
receiving the second capability information by receiving a seventh list sent by the peer terminal through the PC5 RRC signaling, wherein the seventh list includes at least one bit, bits contained in the seventh list correspond one-to-one with the carriers indicated by the carrier indication information in the first list, and a bit value carried by the bit in the seventh list is used to indicate whether the peer terminal supports sending and receiving on the carrier corresponding to the bit.

Optionally, in an embodiment of the present disclosure, sending the second capability information to the local terminal includes:
sending the second capability information to the local terminal through a PC5 MAC CE signaling.

Optionally, in an embodiment of the present disclosure, sending the second capability information to the local terminal through the PC5 MAC CE signaling includes at least one of:
sending the second capability information to the local terminal through a fourth MAC CE signaling, wherein the fourth MAC CE signaling carries fourth indication information, and a bit value carried by a bit of the fourth indication information is used to indicate whether the peer terminal supports sending and receiving on the carrier corresponding to the bit;
sending the second capability information to the local terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on the carrier corresponding to the bit, and a bit value carried by a bit of the sixth indication information is used to indicate whether the peer terminal supports receiving on the carrier corresponding to the bit.

Optionally, in an embodiment of the present disclosure, bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

Optionally, in an embodiment of the present disclosure, the method further includes:
in response to the peer terminal determining that the peer terminal does not support receiving on any of the carriers supported by the local terminal for sending, releasing connection with the local terminal.

In a third aspect, embodiments of the present disclosure provide a communication device. The device is configured in a local terminal, and includes:
a transceiver module, configured to send first capability information to a peer terminal, wherein the first capability information is used to indicate carriers supported by the local terminal for sending and/or receiving, wherein the local terminal and the peer terminal communicate with each other through a sidelink.

In a fourth aspect, embodiments of the present disclosure provide a communication device. The device is configured in a peer terminal, and includes:
a transceiver module, configured to receive first capability information sent by a local terminal, wherein the first capability information is used to indicate carriers supported by the local terminal for sending and/or receiving, wherein the local terminal and the peer terminal communicate with each other through a sidelink.

In a fifth aspect, embodiments of the present disclosure provide a communication device. The communication device includes a processor, which when calling a computer program stored in a memory, implements the method described in the first aspect.

In a sixth aspect, embodiments of the present disclosure provide a communication device. The communication device includes a processor, which when calling a computer program stored in a memory, implements the method described in the second aspect.

In a seventh aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eighth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a nineth aspect, embodiments of the present disclosure provide a communication device, including a processor and an interface circuit; wherein the interface circuit is configured to receive code instructions and transmit the code instructions to the processor; and the processor is configured to run the code instructions, to cause the device to implement the method described in the first aspect.

In a tenth aspect, embodiments of the present disclosure provide a communication device, including a processor and an interface circuit; wherein the interface circuit is configured to receive code instructions and transmit the code instructions to the processor; and the processor is configured to run the code instructions, to cause the device to implement the method described in the second aspect.

In an eleventh aspect, embodiments of the present disclosure provide a communication system. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the nineth aspect and the communication device described in the tenth aspect.

In a twelfth aspect, embodiments of the present disclosure provide a computer readable storage medium, configured to store instructions used by the above terminal device, which when executed, cause the terminal device to implement the method described in any of the first aspect or the second aspect.

In a thirteenth aspect, the present disclosure further provides a computer program product including a computer program that, when run on a computer, causes the computer to perform the method described in any of the first aspect or the second aspect.

In a fourteenth aspect, the present disclosure provides a chip system including at least one processor and interface for supporting the network device to implement the functions involved in any of the first aspect or the second aspect, such as determining or processing at least one of the data and information involved in the above method. In one possible design, the chip system further includes a memory for storing necessary computer programs and data for the source secondary node. This chip system can be composed of chips or include chips and other discrete components.

In a seventeenth aspect, the present disclosure provides a computer program that, when run on a computer, causes the computer to perform the method described in any of the first aspect or the second aspect.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1 is a schematic diagram of an architecture of a communication system provided in an embodiment of the present disclosure.
Fig. 2 is a schematic flowchart of a capability interaction method provided in an embodiment of the present disclosure.
Fig. 3 is a schematic flowchart of a capability interaction method provided in yet another embodiment of the present disclosure.
Fig. 4 is a schematic flowchart of a capability interaction method provided in yet another embodiment of the present disclosure.
Fig. 5 is a schematic flowchart of a capability interaction method provided in yet another embodiment of the present disclosure.
Fig. 6 is a schematic flowchart of a capability interaction method provided in yet another embodiment of the present disclosure.
Fig. 7 is a schematic flowchart of a capability interaction method provided in yet another embodiment of the present disclosure.
Fig. 8 is a schematic flowchart of a capability interaction method provided in yet another embodiment of the present disclosure.
Fig. 9 is a schematic flowchart of a capability interaction method provided in yet another embodiment of the present disclosure.
Fig. 10 is a schematic flowchart of a capability interaction method provided in yet another embodiment of the present disclosure.
Fig. 11 is a schematic flowchart of a capability interaction method provided in yet another embodiment of the present disclosure.
Fig. 12 is a schematic flowchart of a capability interaction method provided in yet another embodiment of the present disclosure.
Fig. 13 is a schematic flowchart of a capability interaction method provided in yet another embodiment of the present disclosure.
Fig. 14 is a schematic flowchart of a capability interaction method provided in yet another embodiment of the present disclosure.
Fig. 15a is a schematic flowchart of a capability interaction method provided in yet another embodiment of the present disclosure.
Fig. 15b is a schematic flowchart of capability interaction method provided in an embodiment of the present disclosure.
Fig. 16 is a block diagram of a communication device provided in an embodiment of the present disclosure.
Fig. 17 is a block diagram of a communication device provided in another embodiment of the present disclosure.
Fig. 18 is a block diagram of a communication device provided in an embodiment of the present disclosure.
Fig. 19 is a block diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when...... " or "in case that...... " or "in response to determining ......".

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, the terms involved in this disclosure are first introduced.

### 1. Sidelink (SL)

Sidelink communication is divided into two modes, one called discovery between terminal devices and the other called communication between terminal devices. Sidelink utilizes uplink resources and uplink physical channels similar to cellular networks (LTE) for data exchange and transmission.

### 2. Carrier Aggregation (CA)

Multiple Component Carriers (CCs) can be aggregated together to achieve higher transmission bandwidth and effectively improve uplink and downlink transmission rates. Terminal devices can determine the maximum number of carriers they can use simultaneously for uplink and downlink transmission based on their own capabilities.

In order to better understand the capability interaction method disclosed in embodiments of the present disclosure, the following first describes the communication system to which the embodiments are applicable.

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

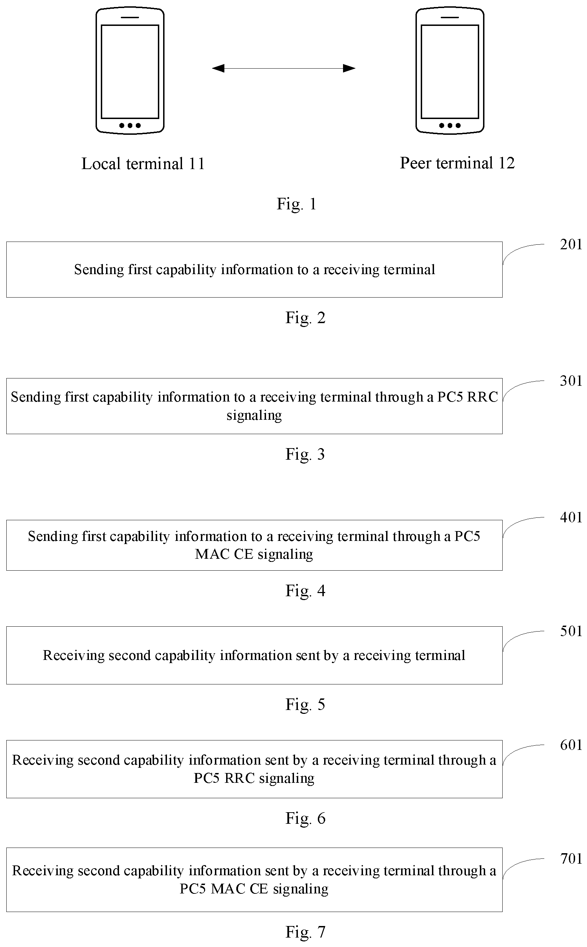

Please refer to Fig. 1, which is a schematic diagram of an architecture of a communication system provided in an embodiment of the present disclosure. The communication system may include, but is not limited to, one network device and one terminal device. The number and form of devices shown in Fig. 1 are for example only and do not constitute a limitation on embodiments of the present disclosure. In practical applications, it may include two or more network devices and two or more terminal devices. The communication system shown in Fig. 1 takes the example of including one local terminal 11 and one peer terminal 12.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The local terminal 11 and one peer terminal 12 in embodiments of the present disclosure is an entity on the user side used for transmitting or receiving signals, such as a mobile phone. The terminal device can also be referred to as a terminal, user equipment (UE), mobile station (MS), mobile terminal device (MT), etc. The terminal device can be a communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in autonomous driving, wireless terminal device in remote medical surgery, wireless terminal device in smart grids, wireless terminal device in transportation safety, wireless terminal device in smart city, and wireless terminal device in smart home, etc. The specific technology and device form adopted by the terminal device are not limited in embodiments of the present disclosure.

Fig. 2 is a schematic flowchart of a capability interaction method provided in an embodiment of the present disclosure, applied to a local terminal. As shown in Fig. 2, the capability interaction method may include the following steps.

Step 201, sending first capability information to a peer terminal.

The method of embodiments of the present disclosure can be applied to NR sidelink carrier aggregation scenarios, and in an embodiment of this disclosure, communication between the local terminal and the peer terminal is conducted through a sidelink.

In an embodiment of the present disclosure, the local terminal may be a sending terminal or a receiving terminal, and the peer terminal may also be a sending terminal or a receiving terminal. Specifically, when the local terminal is the sending terminal, the peer terminal is the receiving terminal; or, when the local terminal is the receiving terminal, the peer terminal is the sending terminal.

In an embodiment of the present disclosure, the first capability information can be used to indicate the carrier sending and/or receiving capability of the local terminal. Specifically, the first capability information can be used to indicate the carrier supported by the local terminal for sending and/or receiving. A detailed introduction on how the local terminal sends the first capability information to indicate the carrier sending and/or receiving capability of the local terminal will be described in the subsequent embodiments.

Furthermore, in an embodiment of the present disclosure, the local terminal sends the first capability information to the peer terminal in order to inform the peer terminal of the carriers supported by the local terminal for sending and/or receiving, so that the peer terminal can determine whether unicast communication can be supported between the local terminal and the peer terminal using its own supported carriers for sending and/or receiving combined with the carriers supported by the local terminal for sending and/or receiving (wherein, when the peer terminal supports receiving on at least one carrier supported by the local terminal for sending, and/or, the peer terminal supports sending on at least one carrier supported by the local terminal for receiving, and/or, the local terminal supports sending on at least one carrier supported by the peer terminal for receiving, and/or, the local terminal supports receiving on at least one carrier supported by the peer terminal for sending, it is determined that unicast communication can be supported, otherwise it is determined that unicast communication is not supported), and when it is determined that unicast communication is not supported, the connection between the peer terminal and the local terminal is released (such as the peer terminal notifying the higher layer to release the PC5-RRC connection with the local terminal). This can avoid the situation where unicast communication still occurs when the carrier supported by the local terminal for sending and/or receiving is different from the carrier supported by the peer terminal. Based on this, the problem of data packet loss or inability to perform unicast communication due to the carrier supported by the local terminal for sending and/or receiving being different from the carrier supported by the peer terminal during unicast communication will not occur, ensuring the stability of unicast communication.

In summary, in the capability interaction method provided in an embodiment of the present disclosure, the local terminal sends the first capability information to the peer terminal, which is used to indicate the carriers supported by the local terminal for sending and/or receiving. The local terminal and the peer terminal communicate through a sidelink. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring the stability of unicast communication.

Fig. 3 is a schematic flowchart of a capability interaction method provided in an embodiment of the present disclosure, applied to a local terminal. As shown in Fig. 3, the capability interaction method may include the following steps.

Step 301, sending first capability information to a peer terminal through a PC5 radio resource control (RRC) signaling.

In an embodiment of the present disclosure, the PC5 RRC signaling may be a UECapabilityInformationSidelink signaling or a UECapabilityEnquirySidelink signaling, or other newly defined PC5 RRC signaling.

In an embodiment of the present disclosure, the method of sending the first capability information to the peer terminal through the PC5 RRC signaling may include at least one of the following.

First, sending the first capability information by sending a first list to the peer terminal through the PC5 RRC signaling.

In an embodiment of the present disclosure, the first list may include carrier indication information corresponding to the carriers supported by the local terminal for sending and receiving (that is, indicating the carriers that support sending and receiving through one list).

The carrier indication information may include at least one of:
a cell identifier corresponding to a carrier;
a carrier identifier corresponding to a carrier;
a carrier band corresponding to a carrier.

For example, assuming that the local terminal supports both sending and receiving on carrier #1, and also supports both sending and receiving on carrier #2. The first list may include carrier identifiers corresponding to carrier #1 and carrier #2, or may include the cell identifier corresponding to carrier #1 and the cell identifier corresponding to carrier #2, or may include the carrier band corresponding to carrier #1 and the carrier band corresponding to carrier #2.

Second, sending the first capability information by sending a second list and/or a third list to the peer terminal through the PC5 RRC signaling.

In an embodiment of the present disclosure, the second list may include carrier indication information corresponding to the carriers supported by the local terminal for sending, and the third list may include carrier indication information corresponding to the carriers supported by the local terminal for receiving (i.e. indicating the carriers supported for sending through one list and only indicating the carriers supported for receiving through another list).

For example, assuming that the local terminal supports both sending and receiving on carrier #1 and supports receiving on carrier #2, then the second list may include the carrier identifier corresponding to carrier #1, or the cell identifier corresponding to carrier #1, or the carrier band corresponding to carrier #1, and the third list may include the carrier identifier corresponding to carrier #1 and the carrier identifier corresponding to carrier #2, or may include the cell identifier corresponding to carrier #1 and the cell identifier corresponding to carrier #2, or may include the carrier band corresponding to carrier #1 and the carrier band corresponding to carrier #2.

From the above content, it can be seen that when the local terminal sends the first list and/or sends the second list and/or sends the third list to the peer terminal, the peer terminal can determine the carrier supported by the local terminal for sending and/or receiving based on the carrier indication information included in the received first list and/or based on the received second list and/or based on the received third list, so that the peer terminal can further determine whether to release the connection with the local terminal in the future.

It should be noted that in an embodiment of the present disclosure, different carriers correspond to different priorities, wherein the carrier indication information in the first list, second list, and third list may be arranged in ascending or descending order based on the priority of the carrier corresponding to that carrier.

For example, taking the first list as an example, assuming the number of carriers is 8 (carriers #0~7), where the local terminal supports aggregating 5 carriers among the 8 carriers, namely carriers #0~4, and the local terminal supports sending and receiving on all 5 carriers of the aggregation, where carriers #0~4 correspond to carrier identifiers #0~4, respectively. Moreover, assuming that the priorities corresponding to carriers #0~4 are: priority of carrier #1>priority of carrier #2>priority of carrier #0>priority of carrier #4>priority of carrier #3, at this time, the carrier indication information included in the first list can be carrier identifiers arranged in ascending order according to the priorities of the corresponding carriers. Therefore, the order of carrier identifiers included in the first list can be carrier identifier #1, carrier identifier #2, carrier identifier #0, carrier identifier #4, and carrier identifier #3.

Further, in an embodiment of the present disclosure, the priority of a carrier may be determined based on the channel busy ratio (CBR) of the resource pool configured for that carrier. When multiple resource pools are configured for the carrier, the priority of the carrier may be determined based on the average CBR of the multiple resource pools. Specifically, when the CBR or average CBR value of the resource pool configured corresponding to the carrier is lower, the priority of the carrier is higher. When the CBR or average CBR value of the resource pool configured corresponding to the carrier is higher, the priority of the carrier is lower. Moreover, in another embodiment disclosed herein, the priority of the carrier may also be determined based on other factors or entirely determined by the terminal implementation.

In this disclosure, the priorities of carriers are defined, and the carrier indication information in the first list, second list, and third list is sorted in ascending or descending order based on the priorities of the carriers corresponding to the carrier indication information. This can make both the local terminal and the peer terminal aware of the priority arrangement of each carrier. Based on this, when the carrier supported by the local terminal for sending also supports receiving at the peer terminal, and/or when the carrier supported by the local terminal for receiving also supports sending at the peer terminal, the local terminal and the peer terminal can choose the carrier with higher priority to achieve unicast transmission, thereby ensuring the transmission efficiency of unicast transmission.

In summary, in the capability interaction method provided in an embodiment of the present disclosure, the local terminal sends the first capability information to the peer terminal, which is used to indicate the carrier supported by the local terminal for sending and/or receiving. The local terminal and the peer terminal communicate through a sidelink. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on its own supported carrier for sending and/or receiving, and combined with the carrier supported by the local terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 4 is a schematic flowchart of a capability interaction method provided in an embodiment of the present disclosure, applied to a local terminal. As shown in Fig. 4, the capability interaction method may include the following steps.

Step 401, sending first capability information to a peer terminal through a PC5 medium access control-control element (MAC CE) signaling.

In an embodiment of the present disclosure, the method of sending the first capability information to the peer terminal through the PC5 MAC CE signaling may include at least one of the following.

### Method 1: sending the first capability information by sending a first MAC CE signaling to the peer terminal.

In an embodiment of the present disclosure, the first MAC CE signaling carries first indication information, and a bit value carried by a bit of the first indication information is used to indicate whether the local terminal supports sending and receiving on the carrier corresponding to the bit (i.e., through a MAC CE, it simultaneously indicates whether the local terminal supports sending and receiving on the carrier).

Specifically, in an embodiment of the present disclosure, the first indication information may include n * 8 bits, where n is 1 or 4. The number of bits of the first indication information is the same as the number of carriers, which is generally 8 or 32. When the number of carriers is 8, n is equal to 1, and when the number of carriers is 32, n is equal to 4. In an embodiment of the present disclosure, the bits of the first indication information correspond one-to-one with respective carriers. Specifically, the bits of the first indication information can correspond one-to-one with the cell identifiers or carrier identifiers corresponding to respective carriers in ascending or descending order.

For example, assuming the number of carriers is 8, which are carriers #0~7, and the corresponding carrier identifiers for carriers #0~7 are carrier identifiers #0~7, and the corresponding cell identifiers are cell identifiers #0~7. At this point, if the bits in the first indication information correspond to the carrier identifiers in ascending order, the first indication information includes eight bits, where the first bit of the first indication information corresponds to carrier identifier #0, the second bit of the first indication information corresponds to carrier identifier #1, the third bit of the first indication information corresponds to carrier identifier #2, and so on. If the bits in the first indication information correspond to the cell identifiers in ascending order, then the first indication information includes eight bits, where the first bit of the first indication information corresponds to cell identifier #0, the second bit of the first indication information corresponds to cell identifier #1, the third bit of the first indication information corresponds to cell identifier #2, and so on.

Furthermore, in an embodiment of the present disclosure, the bit value carried by the bit of the first indication information can be used to indicate whether the local terminal supports sending and receiving on the carrier corresponding to the bit. For example, when the bit value carried by the bit of the first indication information is the first value (such as 1), it indicates that the local terminal supports sending and receiving on the carrier corresponding to that bit. When the bit value carried by the bit of the first indication information is the second value (such as 0), it indicates that the local terminal does not support sending and receiving on the carrier corresponding to that bit.

For example, if the first bit of the first indication information corresponds to carrier #0, and the second bit of the first indication information corresponds to carrier # 1..., then when the first bit of the first indication information carries a bit value of 1 and the second bit carries a bit value of 0, it means that the local terminal supports sending and receiving on carrier #0 and does not support sending and receiving on carrier #1.

### Method 2: sending the first capability information by sending a second MAC CE signaling and/or a third MAC CE signaling to the peer terminal.

In an embodiment of the present disclosure, the second MAC CE signaling carries the second indication information, and the third MAC CE signaling carries the third indication information. The bit value carried by the bit of the second indication information is used to indicate whether the local terminal supports sending on the carrier corresponding to the bit, and the bit value carried by the bit of the third indication information is used to indicate whether the local terminal supports receiving on the carrier corresponding to the bit (i.e., indicating whether the local terminal supports sending or receiving on the carrier through two MAC CEs respectively).

It should be noted that in an embodiment of the present disclosure, the architecture of the second indication information carried by the second MAC CE and the architecture of the third indication information carried by the third MAC CE are the same as the architecture of the first indication information carried by the first MAC CE mentioned above, except that the meaning of the bit value carried by the bit of the second indication information and the third indication information is different from the meaning of the bit value carried by the bit of the first indication information mentioned above.

Specifically, the bit value carried by the bit of the second indication information is used to indicate whether the local terminal supports sending on the carrier corresponding to the bit. For example, when the bit value carried by the bit of the second indication information is the first value (such as 1), it indicates that the local terminal supports sending on the carrier corresponding to that bit. When the bit value carried by the bit of the second indication information is the second value (such as 0), it indicates that the local terminal does not support sending on the carrier corresponding to that bit.

For example, if the first bit of the second indication information corresponds to carrier #0, and the second bit of the second indication information corresponds to carrier #1..., then when the first bit of the second indication information carries a bit value of 1 and the second bit carries a bit value of 0, it means that the local terminal supports sending on carrier #0 and does not support sending on carrier #1.

In an embodiment of the present disclosure, the bit value carried by the bit of the third indication information is used to indicate whether the local terminal supports receiving on the carrier corresponding to the bit. For example, when the bit value carried by the bit of the third indication information is the first value (such as 1), it indicates that the local terminal supports receiving on the carrier corresponding to that bit. When the bit value carried by the bit of the third indication information is the second value (such as 0), it indicates that the local terminal does not support receiving on the carrier corresponding to that bit.

For example, if the first bit of the third indication information corresponds to carrier #0, and the second bit of the third indication information corresponds to carrier #1..., then when the first bit of the third indication information carries a bit value of 1 and the second bit carries a bit value of 0, it means that the local terminal supports receiving on carrier #0 and does not support receiving on carrier #1.

As mentioned above, when the local terminal sends the first MAC CE signaling and/or sends the second MAC CE signaling and/or sends the third MAC CE signaling to the peer terminal, the peer terminal can determine the carrier supported by the local terminal for sending and/or receiving based on the bit values in the received first MAC CE signaling and/or based on the received second MAC CE signaling and/or based on the received third MAC CE signaling, so that the peer terminal can further determine whether to release the connection with the local terminal in the future.

In summary, in the capability interaction method provided in an embodiment of the present disclosure, the local terminal sends the first capability information to the peer terminal, which is used to indicate the carrier supported by the local terminal for sending and/or receiving. The local terminal and the peer terminal communicate through a sidelink. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on its own supported carrier for sending and/or receiving, and combined with the carrier supported by the local terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 5 is a schematic flowchart of a capability interaction method provided in an embodiment of the present disclosure, applied to a local terminal. As shown in Fig. 5, the capability interaction method may include the following steps.

Step 501, receiving second capability information sent by a peer terminal.

In an embodiment of the present disclosure, the second capability information can be used to indicate carriers supported by the peer terminal for sending and/or receiving. Specifically, the carriers supported by the peer terminal for sending and/or receiving mentioned above may include at least one carrier in the carriers supported by the local terminal for sending and/or receiving,
and/or
at least one carrier other than the carrier supported by the local terminal for sending and/or receiving.

Furthermore, a detailed description of how the local terminal receives the second capability information sent by the peer terminal to determine the carrier sending and/or receiving capability of the peer terminal will be provided in subsequent embodiments.

Further, in an embodiment of the present disclosure, if the local terminal receives the second capability information sent by the peer terminal, the local terminal can determine the carrier supported by the peer terminal for sending and/or receiving based on the second capability information, so that the local terminal can determine whether unicast communication is supported between the local terminal and the peer terminal using its own carrier supported for sending and/or receiving combined with the carrier supported by the peer terminal for sending and/or receiving (where, when the peer terminal supports receiving on at least one carrier supported by the local terminal for sending, and/or, the peer terminal supports sending on at least one carrier supported by the local terminal for receiving, and/or, the local terminal supports sending on at least one carrier supported by the peer terminal for receiving, and/or, the local terminal supports receiving on at least one carrier supported by the peer terminal for sending, it is determined that unicast communication is supported), and when unicast communication is not supported, the connection between the local terminal and the peer terminal is released (such as the local terminal notifying the higher layer to release its PC5-RRC connection with the peer terminal). This can avoid the situation where unicast communication still occurs when the carrier supported by the local terminal for sending and/or receiving is different from the carrier supported by the other terminal. Based on this, the problem of data packet loss or inability to perform unicast communication due to the carrier supported by the local terminal for sending and/or receiving being different from the carrier supported by the other terminal during unicast communication will not occur, ensuring the stability of unicast communication.

In summary, in the capability interaction method provided in an embodiment of the present disclosure, the local terminal receives the second capability information sent by the peer terminal, which can be used to indicate the carrier supported by the peer terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring stability of the unicast communication.

Fig. 6 is a schematic flowchart of a capability interaction method provided in an embodiment of the present disclosure, applied to a local terminal. As shown in Fig. 6, the capability interaction method may include the following steps.

Step 601, receiving second capability information sent by a peer terminal through a PC5 RRC signaling.

In an embodiment of the present disclosure, the PC5 RRC signaling may be a UECapabilityInformationSidelink signaling or a UECapabilityEnquirySidelink signaling, or other newly defined PC5 RRC signaling.

In an embodiment of the present disclosure, the method of receiving the second capability information sent by the peer terminal through the PC5 RRC signaling may include at least one of the following.

### Method a: receiving the second capability information by receiving a fourth list sent by the peer terminal through the PC5 RRC signaling.

In an embodiment of the present disclosure, the fourth list may include carrier indication information corresponding to the carriers supported by the peer terminal for sending and receiving. The carriers supported by the peer terminal for sending and receiving includes at least one carrier in the carriers supported by the local terminal for sending and receiving, and/or at least one carrier other than the carriers supported by the local terminal for sending and receiving.

Specifically, in an embodiment of the present disclosure, when the carrier indication information corresponding to the carriers supported by the peer terminal for sending and receiving in the fourth list is the carrier indication information corresponding to the carriers supported by the local terminal for sending and receiving, the fourth list is specifically a subset of the first list mentioned above.

When the carrier indication information corresponding to the carriers supported by the peer terminal for sending and receiving in the fourth list is the carrier indication information corresponding to at least one carrier supported by the local terminal for sending and receiving and the carrier indication information corresponding to at least one carrier other than the carriers supported by the local terminal for sending and receiving, or when the carrier indication information corresponding to the carriers supported by the peer terminal for sending and receiving in the fourth list is the carrier indication information corresponding to at least one carrier other than the carriers supported by the local terminal for sending and receiving, the fourth list may be not a subset of the first list above, for example, the fourth list may include the carrier indication information not included in the first list.

### Method b: receiving the second capability information by receiving a fifth list and/or a sixth list sent by the peer terminal through the PC5 RRC signaling.

In an embodiment of the present disclosure, the fifth list may include carrier indication information corresponding to the carriers supported by the peer terminal for receiving, wherein the carriers supported by the peer terminal for receiving include at least one carrier in the carriers supported by the local terminal for sending, and/or, at least one carrier other than the carriers supported by the local terminal for sending.

Specifically, in an embodiment of the present disclosure, when the carrier indication information corresponding to the carriers supported by the peer terminal for receiving in the fifth list is the carrier indication information corresponding to the carriers supported by the local terminal for sending, the fifth list is a subset of the second list. When the carrier indication information corresponding to the carriers supported by the peer terminal for receiving in the fifth list is the carrier indication information corresponding to at least one carrier supported by the local terminal for sending and the carrier indication information corresponding to at least one carrier other than the carriers supported by the local terminal for sending, or when the carrier indication information corresponding to the carriers supported by the peer terminal for receiving in the fifth list is the carrier indication information corresponding to at least one carrier other than the carriers supported by the local terminal for sending, the fifth list may not be a subset of the second list mentioned above, and may contain carrier indication information not included in the second list.

In another embodiment of the present disclosure, the sixth list may include carrier indication information corresponding to the carriers supported by the peer terminal for sending, wherein the carriers supported by the peer terminal for sending includes at least one carrier in the carriers supported by the local terminal for receiving, and/or at least one carrier other than the carriers supported by the local terminal for receiving.

Specifically, when the carrier indication information corresponding to the carriers supported by the peer terminal for sending in the sixth list is all carrier indication information corresponding to the carriers supported by the local terminal for receiving, the sixth list may be a subset of the third list. When the carrier indication information corresponding to the carriers supported by the peer terminal for sending in the sixth list is the carrier indication information corresponding to at least one carrier supported by the local terminal for receiving and the carrier indication information corresponding to at least one carrier other than the carriers supported by the local terminal for receiving, or when the carrier indication information corresponding to the carriers supported by the peer terminal for sending in the sixth list is the carrier indication information corresponding to at least one carrier other than the carriers supported by the local terminal for receiving, the sixth list may not be a subset of the third list mentioned above, and may contain carrier indication information not included in the third list.

In addition, in an embodiment of the present disclosure, the carrier indication information in the fourth list, fifth list, and sixth list may also be arranged in ascending or descending order based on the priorities of the carriers corresponding to the carrier indication information. For a detailed introduction to this section, please refer to the above embodiment description.

### Method c: receiving the second capability information by receiving a seventh list sent by the peer terminal through the PC5 RRC signaling.

In an embodiment of the present disclosure, the seventh list may include at least one bit, and the bits included in the seventh list correspond one-to-one with the carriers indicated by the carrier indication information in the first list. The bit value carried by the bit in the seventh list is used to indicate whether the peer terminal supports sending and receiving on the carrier corresponding to the bit. When the bit value carried by the bit is the first value (such as 1), it indicates that the peer terminal supports sending and receiving on the carrier corresponding to the bit. When the bit value carried by the bit is the second value (such as 0), it indicates that the peer terminal does not support sending and receiving on the carrier corresponding to the bit.

For example, assuming there are 8 carriers (carriers #0~7), the local terminal supports aggregating 5 carriers among these 8 carriers, namely carriers #0~4, which correspond to cell identifiers #0~4. The first list sent by the local terminal to the peer terminal includes cell identifiers in the following order: cell identifier #3, cell identifier #4, cell identifier #0, cell identifier #2, and cell identifier #1. Based on this, the seventh list should include five bits, where the first bit in the seventh list corresponds to carrier #3 corresponding to cell identifier #3, the second bit in the seventh list corresponds to carrier #4 corresponding to cell identifier #4, the third bit in the seventh list corresponds to carrier #0 corresponding to cell identifier #0, the fourth bit in the seventh list corresponds to carrier #2 corresponding to cell identifier #2, and the fifth bit in the seventh list corresponds to carrier #1 corresponding to cell identifier #1. Based on this, if the first bit in the seventh list is 1 and the second bit is 0, then the seventh list indicates that the peer terminal supports sending and receiving on carrier #3 and does not support sending and receiving on carrier #4.

From the above content, it can be seen that when the local terminal receives the fourth list and/or fifth list and/or sixth list and/or seventh list sent by the peer terminal, the local terminal can determine the carriers supported by the peer terminal for sending and/or receiving based on the carrier indication information included in the fourth list and/or fifth list and/or sixth list, or determine the carriers supported by the peer terminal for sending and receiving based on the bit values in the seventh list, so that the local terminal can further determine whether to release the connection with the peer terminal in the future.

In summary, in the capability interaction method provided in an embodiment of the present disclosure, the local terminal receives the second capability information sent by the peer terminal, which can be used to indicate the carriers supported by the peer terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 7 is a schematic flowchart of a capability interaction method provided in an embodiment of the present disclosure, applied to a local terminal. As shown in Fig. 7, the capability interaction method may include the following steps.

Step 701, receiving second capability information sent by a peer terminal through a PC5 MAC CE signaling.

In an embodiment of the present disclosure, the method of receiving the second capability information sent by the peer terminal through the PC5 MAC CE signaling may include at least one of the following.

### Method A: receiving the second capability information sent by the peer terminal through a fourth MAC CE signaling.

In an embodiment of the present disclosure, the fourth MAC CE signaling carries fourth indication information, and a bit value carried by a bit of the fourth indication information is used to indicate whether the peer terminal supports sending and receiving on the carrier corresponding to the bit.

In an embodiment of the present disclosure, the architecture of the fourth indication information carried by the fourth MAC CE signaling is the same as the architecture of the first indication information carried by the first MAC CE signaling in the above embodiment, with only the indicated meaning being different. For a detailed introduction of the fourth MAC CE signaling, please refer to the above embodiments.

Further, in an embodiment of the present disclosure, the fourth MAC CE signaling mentioned above can be specifically used to indicate the carriers supported by the peer terminal for sending and receiving, wherein the carriers supported by the peer terminal for sending and receiving includes at least one carrier in the carriers supported by the local terminal for sending and receiving, and/or at least one carrier other than the carriers supported by the local terminal for sending and receiving. Specifically, when the carriers supported by the peer terminal for sending and receiving indicated by the fourth indication information in the fourth MAC CE signaling belong to the carriers supported by the local terminal for sending and receiving, then the bits indicating the carriers supported by the peer terminal for sending and receiving in the fourth MAC CE signaling belong to a subset of the bits indicating the carriers supported by the local terminal for sending and receiving in the first MAC CE signaling. When the carriers supported by the peer terminal for sending and receiving indicated by the fourth indication information in the fourth MAC CE signaling include at least one carrier in the carriers supported by the local terminal for sending and receiving, as well as at least one carrier other than the carriers supported by the local terminal for sending and receiving, or when the carriers supported by the peer terminal for sending and receiving indicated by the fourth indication information in the fourth MAC CE signaling include at least one carrier other than the carriers supported by the local terminal for sending and receiving, the bits indicating the carriers supported by the peer terminal for sending and receiving in the fourth MAC CE signaling may not belong to a subset of the bits indicating the carriers supported by the local terminal for sending and receiving in the first MAC CE signaling, for example, the carriers supported by the peer terminal for sending and receiving indicated in the fourth MAC CE signaling may include the carrier supported by the local terminal for sending and receiving that is not indicated in the first MAC CE signaling.

### Method B: receiving the second capability information sent by the peer terminal through a fifth MAC CE signaling and/or a sixth MAC CE signaling.

In an embodiment of the present disclosure, the fifth MAC CE signaling carries the fifth indication information, and the sixth MAC CE signaling carries the sixth indication information. The bit value carried by the bit of the fifth indication information is used to indicate whether the peer terminal supports sending on the carrier corresponding to the bit, and the bit value carried by the bit of the sixth indication information is used to indicate whether the peer terminal supports receiving on the carrier corresponding to the bit.

In an embodiment of the present disclosure, the architecture of the fifth indication information carried by the fifth MAC CE signaling is the same as the architecture of the third indication information carried by the third MAC CE signaling in the above embodiment, and the architecture of the sixth indication information carried by the sixth MAC CE signaling is the same as the architecture of the second indication information carried by the second MAC CE signaling in the above embodiment, with only different indicated meanings. For a detailed introduction of the fifth MAC CE signaling and the sixth MAC CE signaling, please refer to the above embodiments.

Further, in an embodiment of the present disclosure, the fifth MAC CE signaling mentioned above may indicate the carriers supported by the peer terminal for sending, wherein the carriers supported by the peer terminal for sending include at least one carrier in the carriers supported by the local terminal for receiving, and/or at least one carrier other than the carriers supported by the local terminal for receiving. Specifically, when the carriers supported by the peer terminal for sending indicated by the fifth indication information in the fifth MAC CE signaling belong to a subset of the carriers supported by the local terminal for receiving, the bits indicating the carriers supported by the peer terminal for sending in the fifth MAC CE signaling belong to a subset of the bits indicating the carriers supported by the local terminal for receiving in the third MAC CE signaling; when the carriers supported by the peer terminal for sending indicated by the fifth indication information in the fifth MAC CE signaling include at least one carrier in the carriers supported by the local terminal for receiving and at least one carrier other than the carriers supported by the local terminal for receiving, or when the carriers supported by the peer terminal for sending indicated by the fifth indication information in the fifth MAC CE signaling include at least one carrier other than the carriers supported by the local terminal for receiving, the bits indicating the carriers supported by the peer terminal for sending in the fifth MAC CE signaling may not belong to a subset of the bits indicating the carriers supported by the local terminal for receiving in the third MAC CE signaling, for example, the carriers supported by the peer terminal for sending indicated in the fifth MAC CE signaling may include the carrier supported by the local terminal for receiving that is not indicated in the third MAC CE signaling.

In an embodiment of the present disclosure, the sixth MAC CE signaling mentioned above can indicate the carriers supported by the peer terminal for receiving, wherein the carriers supported by the peer terminal for receiving include at least one carrier in the carriers supported by the local terminal for sending, and/or at least one carrier other than the carriers supported by the local terminal for sending. Specifically, when the carriers supported by the peer terminal for receiving indicated by the sixth indication information of the sixth MAC CE signaling belong to a subset of the carriers supported by the local terminal for sending, then the bits indicating the carriers supported by the peer terminal for receiving in the sixth MAC CE signaling belong to a subset of the bits indicating the carriers supported by the local terminal for sending in the second MAC CE signaling; when the carriers supported by the peer terminal for receiving indicated by the sixth indication information of the sixth MAC CE signaling include at least one carrier in the carriers supported by the local terminal for sending and at least one carrier other than the carriers supported by the local terminal for sending, or when the carriers supported by the peer terminal for receiving indicated by the sixth indication information of the sixth MAC CE signaling include at least one carrier other than the carriers supported by the local terminal for sending, the bits indicating the carriers supported by the peer terminal for receiving in the sixth MAC CE signaling may not belong to a subset of the bits indicating the carriers supported by the local terminal for sending in the second MAC CE signaling, for example, the carriers supported by the peer terminal for receiving indicated in the sixth MAC CE signaling may include the carrier supported by the local terminal for sending that is not indicated in the second MAC CE signaling.

In summary, in the capability interaction method provided in an embodiment of the present disclosure, the local terminal receives the second capability information sent by the peer terminal, which can be used to indicate the carriers supported by the peer terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring stability of the unicast communication.

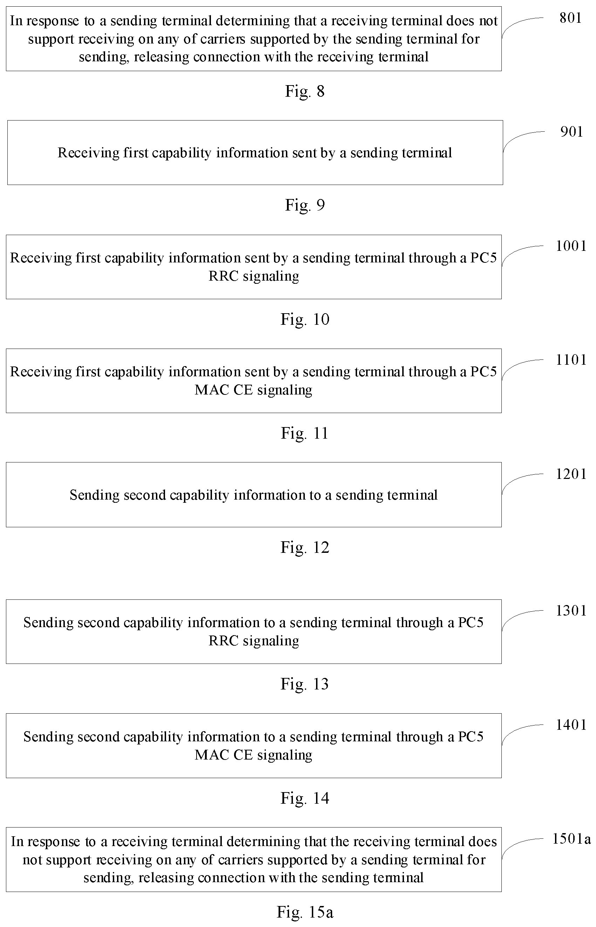

Fig. 8 is a schematic flowchart of a capability interaction method provided in an embodiment of the present disclosure, applied to a local terminal. As shown in Fig. 8, the capability interaction method may include the following steps.

Step 801, in response to the local terminal determining that a peer terminal does not support receiving on any of carriers supported by the local terminal for sending, releasing connection with the peer terminal.

In an embodiment of the present disclosure, the local terminal can specifically notify the higher layer to release its PC5-RRC connection with the peer terminal.

In summary, in the capability interaction method provided in an embodiment of the present disclosure, the local terminal sends the first capability information to the peer terminal, which is used to indicate the carrier supported by the local terminal for sending and/or receiving. The local terminal and the peer terminal communicate through a sidelink. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring the stability of unicast communication.

Fig. 9 is a schematic flowchart of a capability interaction method provided in an embodiment of the present disclosure, applied to a peer terminal. As shown in Fig. 9, the capability interaction method may include the following steps.

Step 901, receiving first capability information sent by a local terminal, wherein the local terminal and the peer terminal communicate with each other through a sidelink.

In an embodiment of the present disclosure, the first capability information is used to indicate the carriers supported by the local terminal for sending and/or receiving.

For the relevant introduction about the first ability information, please refer to description in the above embodiments.

In summary, in the capability interaction method provided in an embodiment of the present disclosure, the peer terminal receives the first capability information sent by the local terminal, which is used to indicate the carriers supported by the local terminal for sending and/or receiving. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring the stability of unicast communication.

Fig. 10 is a schematic flowchart of a capability interaction method provided in an embodiment of the present disclosure, applied to a peer terminal. As shown in Fig. 10, the capability interaction method may include the following steps.

Step 1001, receiving first capability information sent by a local terminal through a PC5 RRC signaling.

In an embodiment of the present disclosure, the method of the peer terminal receiving the first capability information sent by the local terminal through the PC5 RRC signaling may include at least one of:
receiving the first capability information by receiving a first list sent by the local terminal through the PC5 RRC signaling, wherein the first list includes carrier indication information corresponding to carriers supported by the local terminal for sending and receiving;
receiving the first capability information by receiving a second list and/or a third list sent by the local terminal through the PC5 RRC signaling, wherein the second list includes carrier indication information corresponding to carriers supported by the local terminal for sending, and the third list includes carrier indication information corresponding to carriers supported by the local terminal for receiving.

For a detailed introduction of step 1001, please refer to description in the above embodiments.

In summary, in the capability interaction method provided in an embodiment of the present disclosure, the peer terminal receives the first capability information sent by the local terminal, which is used to indicate the carriers supported by the local terminal for sending and/or receiving. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring the stability of unicast communication.

Fig. 11 is a schematic flowchart of a capability interaction method provided in an embodiment of the present disclosure, applied to a peer terminal. As shown in Fig. 11, the capability interaction method may include the following steps.

Step 1101, receiving first capability information sent by a local terminal through a PC5 MAC CE signaling.

In an embodiment of the present disclosure, the method of the peer terminal receiving the first capability information sent by the local terminal through the PC5 MAC CE signaling may include at least one of:
receiving the first capability information sent by the local terminal through a first MAC CE signaling, wherein the first MAC CE signaling carries first indication information, and a bit value carried by a bit of the first indication information is used to indicate whether the local terminal supports sending and receiving on the carrier corresponding to the bit;
receiving the first capability information sent by the local terminal through a second MAC CE signaling and/or a third MAC CE signaling, wherein the second MAC CE signaling carries second indication information, the third MAC CE signaling carries third indication information, a bit value carried by a bit of the second indication information is used to indicate whether the local terminal supports sending on the carrier corresponding to the bit, and a bit value carried by a bit of the third indication information is used to indicate whether the local terminal supports receiving on the carrier corresponding to the bit.

For a detailed introduction of step 1101, please refer to description in the above embodiments.

In summary, in the capability interaction method provided in an embodiment of the present disclosure, the peer terminal receives the first capability information sent by the local terminal, which is used to indicate the carriers supported by the local terminal for sending and/or receiving. From this, it can be seen that in this disclosure, the local terminal sends the first capability information indicating the carrier supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carriers supported by the local terminal for sending and/or receiving being different from the carriers supported by the peer terminal for sending and/or receiving" during unicast communication, ensuring the stability of unicast communication.

Fig. 12 is a schematic flowchart of a capability interaction method provided in an embodiment of the present disclosure, applied to a peer terminal. As shown in Fig. 12, the capability interaction method may include the following steps.

Step 1201, sending second capability information to a local terminal.

The second capability information is used to indicate carriers supported by the peer terminal for sending and/or receiving. The carriers supported by the peer terminal for sending and/or receiving include at least one carrier in the carriers supported by the local terminal for sending and/or receiving, and/or, at least one carrier other than the carriers supported by the local terminal for sending and/or receiving.

For a detailed introduction of step 1201, please refer to description in the above embodiments.

In summary, in the capability interaction method provided in an embodiment of the present disclosure, the peer terminal sends the second capability information to the local terminal, which is used to indicate the carriers supported by the peer terminal for sending and/or receiving, or is used to indicate the carriers supported by the peer terminal for sending and/or receiving in the carriers supported by the local terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 13 is a schematic flowchart of a capability interaction method provided in an embodiment of the present disclosure, applied to a peer terminal. As shown in Fig. 13, the capability interaction method may include the following steps.

Step 1301, sending second capability information to a local terminal through a PC5 RRC signaling.

Optionally, in an embodiment of the present disclosure, the method of sending the second capability information to the local terminal through the PC5 RRC signaling includes at least one of:
sending the second capability information by sending a fourth list to the local terminal through the PC5 RRC signaling, wherein the fourth list includes carrier indication information corresponding to carriers supported by the peer terminal for sending and receiving;
sending the second capability information by sending a fifth list and/or a sixth list to the local terminal through the PC5 RRC signaling, wherein the fifth list includes carrier indication information corresponding to the carriers supported by the peer terminal for receiving, and the sixth list includes carrier indication information corresponding to the carriers supported by the peer terminal for sending.

Optionally, in another embodiment of the present disclosure, sending the second capability information to the local terminal through the PC5 RRC signaling may further include:
receiving the second capability information by receiving a seventh list sent by the peer terminal through the PC5 RRC signaling, wherein the seventh list comprises at least one bit, bits contained in the seventh list correspond one-to-one with the carriers indicated by the carrier indication information in the first list, and a bit value carried by the bit in the seventh list is used to indicate whether the peer terminal supports sending and receiving on the carrier corresponding to the bit.

For a detailed introduction of step 1301, please refer to description in the above embodiments.

In summary, in the capability interaction method provided in an embodiment of the present disclosure, the peer terminal sends the second capability information to the local terminal, which is used to indicate the carriers supported by the peer terminal for sending and/or receiving, or is used to indicate the carriers supported by the peer terminal for sending and/or receiving in the carriers supported by the local terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 14 is a schematic flowchart of a capability interaction method provided in an embodiment of the present disclosure, applied to a peer terminal. As shown in Fig. 14, the capability interaction method may include the following steps.

Step 1401, sending second capability information to a local terminal through a PC5 MAC CE signaling.

Sending the second capability information to the local terminal through the PC5 MAC CE signaling includes at least one of:
sending the second capability information to the local terminal through a fourth MAC CE signaling, wherein the fourth MAC CE signaling carries fourth indication information, and a bit value carried by a bit of the fourth indication information is used to indicate whether the peer terminal supports sending and receiving on the carrier corresponding to the bit;
sending the second capability information to the local terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on the carrier corresponding to the bit, and a bit value carried by a bit of the sixth indication information is used to indicate whether the peer terminal supports receiving on the carrier corresponding to the bit.

For a detailed introduction of step 1401, please refer to description in the above embodiments.

In summary, in the capability interaction method provided in an embodiment of the present disclosure, the peer terminal sends the second capability information to the local terminal, which is used to indicate the carriers supported by the peer terminal for sending and/or receiving, or is used to indicate the carriers supported by the peer terminal for sending and/or receiving in the carriers supported by the local terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 15a is a schematic flowchart of a capability interaction method provided in an embodiment of the present disclosure, applied to a peer terminal. As shown in Fig. 15a, the capability interaction method may include the following steps.

Step 1501a, in response to the peer terminal determining that the peer terminal does not support receiving on any of carriers supported by a local terminal for sending, releasing connection with the local terminal.

In an embodiment of the present disclosure, the peer terminal can specifically notify the higher layer to release its PC5-RRC connection with the local terminal.

In summary, in the capability interaction method provided in an embodiment of the present disclosure, the peer terminal sends the second capability information to the local terminal, which is used to indicate the carriers supported by the peer terminal for sending and/or receiving, or is used to indicate the carriers supported by the peer terminal for sending and/or receiving in the carriers supported by the local terminal for sending and/or receiving. From this, it can be seen that in this disclosure, the local terminal receives the second capability information indicating the carrier sending and/or receiving capability of the peer terminal sent by the peer terminal, so that the local terminal can determine whether unicast communication can be supported between the local terminal and the peer terminal based on the carriers supported by itself for sending and/or receiving, combined with the carriers supported by the peer terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

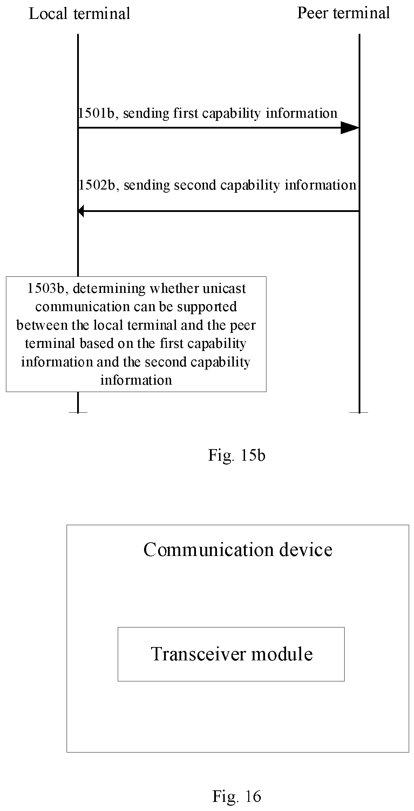

Fig. 15b is a schematic flowchart of a capability interaction method provided in an embodiment of the present disclosure. As shown in Fig. 15b, the capability interaction method may include the following steps.

Step 1501b, a local terminal sends first capability information to a peer terminal, wherein the first capability information is used to indicate carriers supported by the local terminal for sending and/or receiving.

Step 1502b, the peer terminal receives the first capability information sent by the local terminal, and sends second capability information to the local terminal, wherein the second capability information is used to indicate carriers supported by the peer terminal for sending and/or receiving.

Step 1503b, the local terminal determines whether unicast communication can be supported between the local terminal and the peer terminal based on the first capability information and the second capability information.

It should be noted that there may be a "and/or" relationship between step 1501b and step 1502b mentioned above. Specifically, in an embodiment of the present disclosure, the local terminal may only perform step 1501b to send the first capability information to the peer terminal, so that the peer terminal can determine whether unicast communication can be supported between the local terminal and the peer terminal based on the carriers supported by the local terminal for sending and/or receiving indicated by the received first capability information and the carrier sending and/or receiving capability of the peer terminal itself. Alternatively, in another embodiment of the present disclosure, the local terminal may only perform step 1502b to receive the second capability information sent by the peer terminal. At this time, the local terminal can determine whether unicast communication can be supported between the local terminal and the peer terminal based on the carriers supported by the peer terminal for sending and/or receiving indicated by the second capability information and the carrier sending and/or receiving capability of the local terminal itself. Furthermore, in yet another embodiment of the present disclosure, the local terminal may also perform steps 1501b and 1502b described above, and determine whether unicast communication can be supported between the local terminal and the peer terminal by performing step 1503b.

In summary, in the capability interaction method provided in an embodiment of the present disclosure, the peer terminal will interact with the local terminal with the first capability information and the second capability information. The first capability information is used to indicate the carriers supported by the local terminal for sending and/or receiving, and the second capability information is used to indicate the carriers supported by the peer terminal for sending and/or receiving. Therefore, the local terminal can determine whether unicast communication can be supported between the local terminal and the peer terminal based on the first capability information and the second capability information. When unicast communication is not supported, the connection is released, thereby avoiding the occurrence of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Fig. 16 is a schematic block diagram of a communication device provided in an embodiment of the present disclosure. As shown in Fig. 16, the device may include:
a transceiver module, configured to send first capability information to a peer terminal, wherein the first capability information is used to indicate carriers supported by the local terminal for sending and/or receiving, wherein the local terminal and the peer terminal communicate with each other through a sidelink.

In summary, in the communication device provided in an embodiment of the present disclosure, the local terminal sends first capability information to the peer terminal, which is used to indicate the carriers supported by the local terminal for sending and/or receiving. The local terminal and the peer terminal communicate with each other through a sidelink. From this, it can be seen that in this disclosure, the local terminal sends the first capability information indicating the carriers supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Optionally, in an embodiment of the present disclosure, the transceiver module is configured to:
send the first capability information to the peer terminal through a PC5 radio resource control (RRC) signaling.

Optionally, in an embodiment of the present disclosure, the transceiver module is configured for at least one of:
sending the first capability information by sending a first list to the peer terminal through the PC5 RRC signaling, wherein the first list includes carrier indication information corresponding to carriers supported by the local terminal for sending and receiving;
sending the first capability information by sending a second list and/or a third list to the peer terminal through the PC5 RRC signaling, wherein the second list includes carrier indication information corresponding to carriers supported by the local terminal for sending, and the third list includes carrier indication information corresponding to carriers supported by the local terminal for receiving.

Optionally, in an embodiment of the present disclosure, the carrier indication information includes at least one of:
a cell identifier corresponding to a carrier;
a carrier identifier corresponding to a carrier;
a carrier band corresponding to a carrier.

Optionally, in an embodiment of the present disclosure, the transceiver module is configured to:
send the first capability information to the peer terminal through a PC5 media access control - control element (MAC CE) signaling.

Optionally, in an embodiment of the present disclosure, the transceiver module is configured for at least one of:
sending the first capability information by sending a first MAC CE signaling to the peer terminal, wherein the first MAC CE signaling carries first indication information, and a bit value carried by a bit of the first indication information is used to indicate whether the local terminal supports sending and receiving on the carrier corresponding to the bit;
sending the first capability information by sending a second MAC CE signaling and/or a third MAC CE signaling to the peer terminal, wherein the second MAC CE signaling carries second indication information, the third MAC CE signaling carries third indication information, a bit value carried by a bit of the second indication information is used to indicate whether the local terminal supports sending on the carrier corresponding to the bit, and a bit value carried by a bit of the third indication information is used to indicate whether the local terminal supports receiving on the carrier corresponding to the bit.

Optionally, in an embodiment of the present disclosure, the device is configured to:
receive second capability information sent by the peer terminal, wherein the second capability information is used to indicate carriers supported by the peer terminal for sending and/or receiving.

Optionally, in an embodiment of the present disclosure, the carriers supported by the peer terminal for sending and/or receiving include at least one carrier in the carriers supported by the local terminal for sending and/or receiving,
and/or
at least one carrier other than the carriers supported by the local terminal for sending and/or receiving.

Optionally, in an embodiment of the present disclosure, the device is configured to:
receive the second capability information sent by the peer terminal through a PC5 RRC signaling.

Optionally, in an embodiment of the present disclosure, the device is configured for at least one of:
receiving the second capability information by receiving a fourth list sent by the peer terminal through the PC5 RRC signaling, wherein the fourth list includes carrier indication information corresponding to carriers supported by the peer terminal for sending and receiving;
receiving the second capability information by receiving a fifth list and/or a sixth list sent by the peer terminal through the PC5 RRC signaling, wherein the fifth list includes carrier indication information corresponding to the carriers supported by the peer terminal for receiving, and the sixth list includes carrier indication information corresponding to the carriers supported by the peer terminal for sending.

Optionally, the device is further configured to:
receive the second capability information by receiving a seventh list sent by the peer terminal through the PC5 RRC signaling, wherein the seventh list includes at least one bit, bits contained in the seventh list correspond one-to-one with the carriers indicated by the carrier indication information in the first list, and a bit value carried by the bit in the seventh list is used to indicate whether the peer terminal supports sending and receiving on the carrier corresponding to the bit.

Optionally, in an embodiment of the present disclosure, the device is configured to:
receive the second capability information sent by the peer terminal through a PC5 MAC CE signaling.

Optionally, in an embodiment of the present disclosure, the device is configured for at least one of:
receiving the second capability information sent by the peer terminal through a fourth MAC CE signaling, wherein the fourth MAC CE signaling carries fourth indication information, and a bit value carried by a bit of the fourth indication information is used to indicate whether the peer terminal supports sending and receiving on the carrier corresponding to the bit;
receiving the second capability information sent by the peer terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on the carrier corresponding to the bit, and a bit value carried by a bit of the sixth indication information is used to indicate whether the peer terminal supports receiving on the carrier corresponding to the bit.

Optionally, in an embodiment of the present disclosure, bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

Optionally, in an embodiment of the present disclosure, the device is configured to:
in response to the local terminal determining that the peer terminal does not support receiving on any of the carriers supported by the local terminal for sending, release connection with the peer terminal.

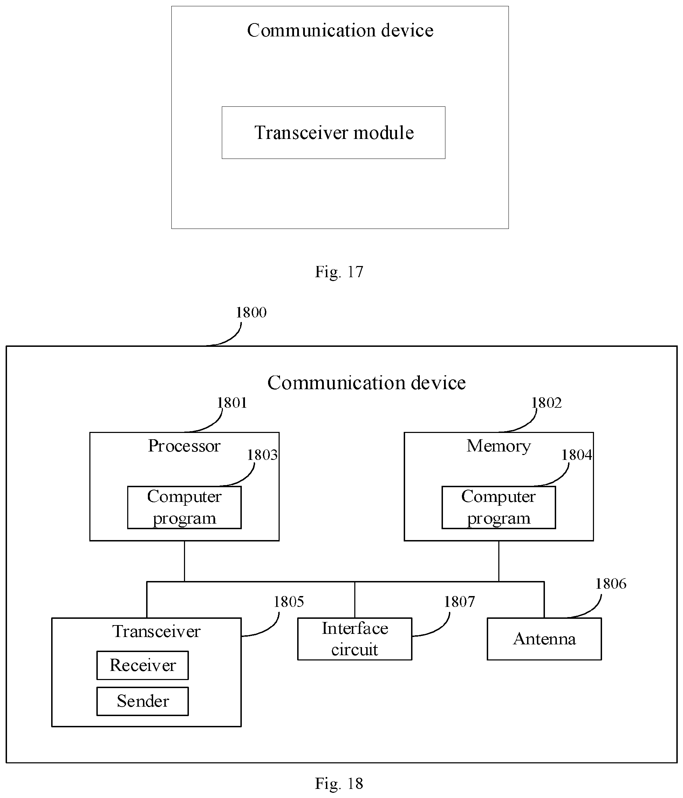

Fig. 17 is a block diagram of a communication device provided in an embodiment of the present disclosure. As shown in Fig. 17, the device may include:
a transceiver module, configured to receive first capability information sent by a local terminal, wherein the first capability information is used to indicate carriers supported by the local terminal for sending and/or receiving, wherein the local terminal and the peer terminal communicate with each other through a sidelink.

In summary, in the communication device provided in an embodiment of the present disclosure, the local terminal sends first capability information to the peer terminal, which is used to indicate the carriers supported by the local terminal for sending and/or receiving. The local terminal and the peer terminal communicate with each other through a sidelink. From this, it can be seen that in this disclosure, the local terminal sends the first capability information indicating the carriers supported by the local terminal for sending and/or receiving to the peer terminal, so that the peer terminal can determine whether unicast communication can be supported between the local terminal and the peer terminal based on the carriers supported by itself for sending and/or receiving, and combined with the carriers supported by the local terminal for sending and/or receiving. When unicast communication is not supported, the connection is released, thereby avoiding the situation of "data packet loss or inability to perform unicast communication due to the carrier supported by the local terminal for sending and/or receiving being different from the carrier supported by the peer terminal for sending and/or receiving" during unicast communication, ensuring the stability of unicast communication.

Optionally, in an embodiment of the present disclosure, the transceiver module is configured to:
receive the first capability information sent by the local terminal through a PC5 RRC signaling.

Optionally, in an embodiment of the present disclosure, the transceiver module is configured for at least one of:
receiving the first capability information by receiving a first list sent by the local terminal through the PC5 RRC signaling, wherein the first list includes carrier indication information corresponding to carriers supported by the local terminal for sending and receiving;
receiving the first capability information by receiving a second list and/or a third list sent by the local terminal through the PC5 RRC signaling, wherein the second list includes carrier indication information corresponding to carriers supported by the local terminal for sending, and the third list includes carrier indication information corresponding to carriers supported by the local terminal for receiving.

Optionally, in an embodiment of the present disclosure, the carrier indication information includes at least one of:
a cell identifier corresponding to a carrier;
a carrier identifier corresponding to a carrier;
a carrier band corresponding to a carrier.

Optionally, in an embodiment of the present disclosure, the transceiver module is configured to:
receive the first capability information sent by the local terminal through a PC5 MAC CE signaling.

Optionally, in an embodiment of the present disclosure, the transceiver module is configured for at least one of:
receiving the first capability information sent by the local terminal through a first MAC CE signaling, wherein the first MAC CE signaling carries first indication information, and a bit value carried by a bit of the first indication information is used to indicate whether the local terminal supports sending and receiving on the carrier corresponding to the bit;
receiving the first capability information sent by the local terminal through a second MAC CE signaling and/or a third MAC CE signaling, wherein the second MAC CE signaling carries second indication information, the third MAC CE signaling carries third indication information, a bit value carried by a bit of the second indication information is used to indicate whether the local terminal supports sending on the carrier corresponding to the bit, and a bit value carried by a bit of the third indication information is used to indicate whether the local terminal supports receiving on the carrier corresponding to the bit.

Optionally, in an embodiment of the present disclosure, the device is further configured to:
send second capability information to the local terminal, wherein the second capability information is used to indicate carriers supported by the peer terminal for sending and/or receiving.

Optionally, in an embodiment of the present disclosure, the carriers supported by the peer terminal for sending and/or receiving include at least one carrier in the carriers supported by the local terminal for sending and/or receiving,
and/or
at least one carrier other than the carriers supported by the local terminal for sending and/or receiving.

Optionally, in an embodiment of the present disclosure, the device is further configured to:
send the second capability information to the local terminal through a PC5 RRC signaling.

Optionally, in an embodiment of the present disclosure, the device is further configured for at least one of:
sending the second capability information by sending a fourth list to the local terminal through the PC5 RRC signaling, wherein the fourth list includes carrier indication information corresponding to carriers supported by the peer terminal for sending and receiving;
sending the second capability information by sending a fifth list and/or a sixth list to the local terminal through the PC5 RRC signaling, wherein the fifth list includes carrier indication information corresponding to the carriers supported by the peer terminal for receiving, and the sixth list includes carrier indication information corresponding to the carriers supported by the peer terminal for sending.

Optionally, in an embodiment of the present disclosure, the device is further configured to:
receive the second capability information by receiving a seventh list sent by the peer terminal through the PC5 RRC signaling, wherein the seventh list includes at least one bit, bits contained in the seventh list correspond one-to-one with the carriers indicated by the carrier indication information in the first list, and a bit value carried by the bit in the seventh list is used to indicate whether the peer terminal supports sending and receiving on the carrier corresponding to the bit.

Optionally, in an embodiment of the present disclosure, the device is further configured to:
send the second capability information to the local terminal through a PC5 MAC CE signaling.

Optionally, in an embodiment of the present disclosure, the device is further configured for at least one of:
sending the second capability information to the local terminal through a fourth MAC CE signaling, wherein the fourth MAC CE signaling carries fourth indication information, and a bit value carried by a bit of the fourth indication information is used to indicate whether the peer terminal supports sending and receiving on the carrier corresponding to the bit;
sending the second capability information to the local terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on the carrier corresponding to the bit, and a bit value carried by a bit of the sixth indication information is used to indicate whether the peer terminal supports receiving on the carrier corresponding to the bit.

Optionally, in an embodiment of the present disclosure, bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

Optionally, in an embodiment of the present disclosure, the device is further configured to:
in response to the peer terminal determining that the peer terminal does not support receiving on any of the carriers supported by the local terminal for sending, release connection with the local terminal.

Please refer to Fig. 18, which is a block diagram of a communication device 1800 provided in an embodiment of the present disclosure. The communication device 1800 may be a network device, or may be a terminal device, or may be a chip, a chip system, or a processor that supports the network device to implement the above methods, or may be a chip, a chip system, or a processor that supports the terminal device to implement the above methods. This device can be used to implement the methods described in the above method embodiments, which can be referred to in the description of the above method embodiments.

The communication device 1800 may include one or more processors 1801. The processor 1801 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device 1800 may also include one or more memories 1802, on which computer programs 1804 may be stored. The processor 1801 executes the computer programs 1804 to enable the communication device 1800 to perform the methods described in the above method embodiments. Optionally, the memory 1802 may also store data. The communication device 1800 and the memory 1802 can be set separately or integrated together.

Optionally, the communication device 1800 may also include a transceiver 1805 and an antenna 1806. The transceiver 1805 can be referred to as a transceiver unit, transceiver machine, or transceiver circuit, etc., used to achieve transceiver functions. The transceiver 1805 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1800 may also include one or more interface circuits 1807. The interface circuit 1807 is used to receive code instructions and transmit them to the processor 1801. The processor 1801 executes the code instructions to cause the communication device 1800 to perform the method described in the above method embodiments.

In one implementation, the processor 1801 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1801 may store a computer program 1803 that runs on the processor 1804 and enables the communication device 1800 to perform the method described in the above method embodiments. The computer program 1803 may be fixed in the processor 1801, in which case the processor 1801 may be implemented by hardware.

In one implementation, the communication device 1800 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device 1800 described in the above embodiments may be the first access network device or the terminal device, but the scope of the communication device 1800 described in this disclosure is not limited to this, and the structure of the communication device may not be limited by Fig. 16. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

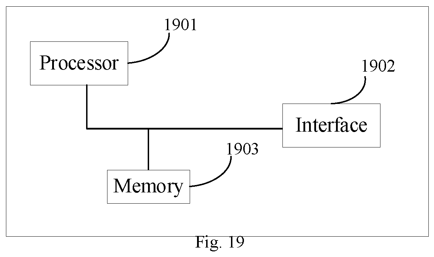

For the communication device that can be a chip or chip system, reference can be made to the block diagram of the chip shown in Fig. 19. The chip shown in Fig. 19 includes processors 1901 and interfaces 1902. The number of processors 1901 can be one or more, and the number of interfaces 1902 can be multiple.

Optionally, the chip also includes a memory 1903 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

**In** the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. **In** embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, pre-stored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A capability interaction method, performed by a local terminal, comprising:
sending first capability information to a peer terminal, wherein the first capability information is used to indicate carriers supported by the local terminal for sending and/or receiving, wherein the local terminal and the peer terminal communicate with each other through a sidelink.

2. The method of claim 1, wherein sending the first capability information to the peer terminal comprises:
sending the first capability information to the peer terminal through a PC5 radio resource control (RRC) signaling.

3. The method of claim 2, wherein sending the first capability information to the peer terminal through the PC5 RRC signaling comprises at least one of:
sending the first capability information by sending a first list to the peer terminal through the PC5 RRC signaling, wherein the first list comprises carrier indication information corresponding to the carriers supported by the local terminal for sending and receiving; or
sending the first capability information by sending a second list and/or a third list to the peer terminal through the PC5 RRC signaling, wherein the second list comprises carrier indication information corresponding to the carriers supported by the local terminal for sending, and the third list comprises carrier indication information corresponding to the carriers supported by the local terminal for receiving.

4. The method of claim 3, wherein the carrier indication information comprises at least one of:
a cell identifier corresponding to a carrier;
a carrier identifier corresponding to a carrier; or
a carrier band corresponding to a carrier.

5. The method of claim 1, wherein sending the first capability information to the peer terminal comprises:
sending the first capability information to the peer terminal through a PC5 media access control - control element (MAC CE) signaling.

6. The method of claim 5, wherein sending the first capability information to the peer terminal through the PC5 MAC CE signaling comprises at least one of:
sending the first capability information by sending a first MAC CE signaling to the peer terminal, wherein the first MAC CE signaling carries first indication information, and a bit value carried by a bit of the first indication information is used to indicate whether the local terminal supports sending and receiving on a carrier corresponding to the bit; or
sending the first capability information by sending a second MAC CE signaling and/or a third MAC CE signaling to the peer terminal, wherein the second MAC CE signaling carries second indication information, the third MAC CE signaling carries third indication information, a bit value carried by a bit of the second indication information is used to indicate whether the local terminal supports sending on a carrier corresponding to the bit, and a bit value carried by a bit of the third indication information is used to indicate whether the local terminal supports receiving on a carrier corresponding to the bit.

7. The method of any of claims 1-6, further comprising:
receiving second capability information sent by the peer terminal, wherein the second capability information is used to indicate carriers supported by the peer terminal for sending and/or receiving.

8. The method of claim 7, wherein the carriers supported by the peer terminal for sending and/or receiving comprises at least one carrier in the carriers supported by the local terminal for sending and/or receiving,
and/or
at least one carrier other than the carriers supported by the local terminal for sending and/or receiving.

9. The method of claim 7 or 8, wherein receiving the second capability information sent by the peer terminal comprises:
receiving the second capability information sent by the peer terminal through a PC5 RRC signaling.

10. The method of claim 9, wherein receiving the second capability information sent by the peer terminal through the PC5 RRC signaling comprises at least one of:
receiving the second capability information by receiving a fourth list sent by the peer terminal through the PC5 RRC signaling, wherein the fourth list comprises carrier indication information corresponding to the carriers supported by the peer terminal for sending and receiving; or
receiving the second capability information by receiving a fifth list and/or a sixth list sent by the peer terminal through the PC5 RRC signaling, wherein the fifth list comprises carrier indication information corresponding to the carriers supported by the peer terminal for receiving, and the sixth list comprises carrier indication information corresponding to the carriers supported by the peer terminal for sending.

11. The method of claim 9, wherein receiving the second capability information sent by the peer terminal through the PC5 RRC signaling comprises:
receiving the second capability information by receiving a seventh list sent by the peer terminal through the PC5 RRC signaling, wherein the seventh list comprises at least one bit, bits comprised in the seventh list correspond one-to-one with the carriers indicated by the carrier indication information in the first list, and a bit value carried by a bit in the seventh list is used to indicate whether the peer terminal supports sending and receiving on a carrier corresponding to the bit.

12. The method of claim 9, wherein receiving the second capability information sent by the peer terminal comprises:
receiving the second capability information sent by the peer terminal through a PC5 MAC CE signaling.

13. The method of claim 12, wherein receiving the second capability information sent by the peer terminal through the PC5 MAC CE signaling comprises at least one of:
receiving the second capability information sent by the peer terminal through a fourth MAC CE signaling, wherein the fourth MAC CE signaling carries fourth indication information, and a bit value carried by a bit of the fourth indication information is used to indicate whether the peer terminal supports sending and receiving on a carrier corresponding to the bit; or
receiving the second capability information sent by the peer terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on a carrier corresponding to the bit, and a bit value carried by a bit of the sixth indication information is used to indicate whether the peer terminal supports receiving on a carrier corresponding to the bit.

14. The method of claim 13, wherein bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

15. The method of claim 7, further comprising:
in response to the local terminal determining that the peer terminal does not support receiving on any of the carriers supported by the local terminal for sending, releasing connection with the peer terminal.

16. A capability interaction method, performed by a peer terminal, comprising:
receiving first capability information sent by a local terminal, wherein the first capability information is used to indicate carriers supported by the local terminal for sending and/or receiving, wherein the local terminal and the peer terminal communicate with each other through a sidelink.

17. The method of claim 16, wherein receiving the first capability information sent by the local terminal comprises:
receiving the first capability information sent by the local terminal through a PC5 RRC signaling.

18. The method of claim 17, wherein receiving the first capability information sent by the local terminal through the PC5 RRC signaling comprises at least one of:
receiving the first capability information by receiving a first list sent by the local terminal through the PC5 RRC signaling, wherein the first list comprises carrier indication information corresponding to the carriers supported by the local terminal for sending and receiving; or
receiving the first capability information by receiving a second list and/or a third list sent by the local terminal through the PC5 RRC signaling, wherein the second list comprises carrier indication information corresponding to the carriers supported by the local terminal for sending, and the third list comprises carrier indication information corresponding to the carriers supported by the local terminal for receiving.

19. The method of claim 18, wherein the carrier indication information comprises at least one of:
a cell identifier corresponding to a carrier;
a carrier identifier corresponding to a carrier; or
a carrier band corresponding to a carrier.

20. The method of claim 17, wherein receiving the first capability information sent by the local terminal comprises:
receiving the first capability information sent by the local terminal through a PC5 MAC CE signaling.

21. The method of claim 20, wherein receiving the first capability information sent by the local terminal through the PC5 MAC CE signaling comprises at least one of:
receiving the first capability information sent by the local terminal through a first MAC CE signaling, wherein the first MAC CE signaling carries first indication information, and a bit value carried by a bit of the first indication information is used to indicate whether the local terminal supports sending and receiving on a carrier corresponding to the bit; or
receiving the first capability information sent by the local terminal through a second MAC CE signaling and/or a third MAC CE signaling, wherein the second MAC CE signaling carries second indication information, the third MAC CE signaling carries third indication information, a bit value carried by a bit of the second indication information is used to indicate whether the local terminal supports sending on a carrier corresponding to the bit, and a bit value carried by a bit of the third indication information is used to indicate whether the local terminal supports receiving on a carrier corresponding to the bit.

22. The method of any of claims 16-21, further comprising:
sending second capability information to the local terminal, wherein the second capability information is used to indicate carriers supported by the peer terminal for sending and/or receiving.

23. The method of claim 22, wherein the carriers supported by the peer terminal for sending and/or receiving comprise at least one carrier in the carriers supported by the local terminal for sending and/or receiving,
and/or
at least one carrier other than the carriers supported by the local terminal for sending and/or receiving.

24. The method of claim 22 or 23, wherein sending second capability information to the local terminal comprises:
sending the second capability information to the local terminal through a PC5 RRC signaling.

25. The method of claim 24, wherein sending the second capability information to the local terminal through the PC5 RRC signaling comprises at least one of:
sending the second capability information by sending a fourth list to the local terminal through the PC5 RRC signaling, wherein the fourth list comprises carrier indication information corresponding to the carriers supported by the peer terminal for sending and receiving; or
sending the second capability information by sending a fifth list and/or a sixth list to the local terminal through the PC5 RRC signaling, wherein the fifth list comprises carrier indication information corresponding to the carriers supported by the peer terminal for receiving, and the sixth list comprises carrier indication information corresponding to the carriers supported by the peer terminal for sending.

26. The method of claim 24, wherein sending the second capability information to the local terminal through the PC5 RRC signaling comprises:
receiving the second capability information by receiving a seventh list sent by the peer terminal through the PC5 RRC signaling, wherein the seventh list comprises at least one bit, bits comprised in the seventh list correspond one-to-one with the carriers indicated by the carrier indication information in the first list, and a bit value carried by a bit in the seventh list is used to indicate whether the peer terminal supports sending and receiving on a carrier corresponding to the bit.

27. The method of claim 22 or 23, wherein sending the second capability information to the local terminal comprises:
sending the second capability information to the local terminal through a PC5 MAC CE signaling.

28. The method of claim 27, wherein sending the second capability information to the local terminal through the PC5 MAC CE signaling comprises at least one of:
sending the second capability information to the local terminal through a fourth MAC CE signaling, wherein the fourth MAC CE signaling carries fourth indication information, and a bit value carried by a bit of the fourth indication information is used to indicate whether the peer terminal supports sending and receiving on a carrier corresponding to the bit; or
sending the second capability information to the local terminal through a fifth MAC CE signaling and/or a sixth MAC CE signaling, wherein the fifth MAC CE signaling carries fifth indication information, the sixth MAC CE signaling carries sixth indication information, a bit value carried by a bit of the fifth indication information is used to indicate whether the peer terminal supports sending on a carrier corresponding to the bit, and a bit value carried by a bit of the sixth indication information is used to indicate whether the peer terminal supports receiving on a carrier corresponding to the bit.

29. The method of claim 28, wherein bits in the fourth MAC CE signaling indicating the carriers supported by the peer terminal for sending and receiving belong to a subset of bits in the first MAC CE signaling indicating the carriers supported by the local terminal for sending and receiving, or bits in the fourth MAC CE signaling indicating the carriers supported by the peer terminal for sending and receiving do not belong to a subset of bits in the first MAC CE signaling indicating the carriers supported by the local terminal for sending and receiving;
bits in the fifth MAC CE signaling indicating the carriers supported by the peer terminal for sending belong to a subset of bits in the third MAC CE signaling indicating the carriers supported by the local terminal for receiving, or bits in the fifth MAC CE signaling indicating the carriers supported by the peer terminal for sending do not belong to a subset of bits in the third MAC CE signaling indicating the carriers supported by the local terminal for receiving;
bits in the sixth MAC CE signaling indicating the carriers supported by the peer terminal for receiving belong to a subset of bits in the second MAC CE signaling indicating the carriers supported by the local terminal for sending, or bits in the sixth MAC CE signaling indicating the carriers supported by the peer terminal for receiving do not belong to a subset of bits in the second MAC CE signaling indicating the carriers supported by the local terminal for sending.

30. The method of claim 16, further comprising:
in response to the peer terminal determining that the peer terminal does not support receiving on any of the carriers supported by the local terminal for sending, releasing connection with the local terminal.

31. A communication device, configured in a local terminal, comprising:
a transceiver module, configured to send first capability information to a peer terminal, wherein the first capability information is used to indicate carriers supported by the local terminal for sending and/or receiving, wherein the local terminal and the peer terminal communicate with each other through a sidelink.

32. A communication device, configured in a peer terminal, comprising:
a transceiver module, configured to receive first capability information sent by a local terminal, wherein the first capability information is used to indicate carriers supported by the local terminal for sending and/or receiving, wherein the local terminal and the peer terminal communicate with each other through a sidelink.

33. A communication device, comprising a processor and a memory, wherein the memory stores a computer program, the processor is configured to execute the computer program stored in the memory to cause the device to perform the method according to any of claims 1-15 or claims 16-30.

34. A communication device, comprising a processor and an interface circuit, wherein the interface circuit is configured to receive code instructions and transmit the code instructions to the processor; the processor is configured to run the code instructions to execute the method according to any of claims 1-15 or claims 16-30.

35. A computer readable storage medium storing instructions than, when executed, cause the method of any of claims 1-15 or claims 16-30 to be implemented.
